# EUROPÄISCHE PATENTSCHRIFT

(11) **EP 0 725 100 B1**
(45) Veröffentlichungstag und Bekanntmachung des Hinweises auf die Patenterteilung: **04.03.1998**
(21) Anmeldenummer: 95114698.4
(22) Anmeldetag: 19.09.1995
(51) Int. Cl.: C08G 69/26, C08G 69/36, C08L 77/06, C08L 77/00

(54) **Farblose, transparente Copolyamide, ihre Herstellung sowie Formkörper aus diesen Copolyamiden, ihren Blends oder Legierungen**
Colorless transparent copolyamides, their preparation, and moulded articles therefrom or from compositions containing them
Copolyamides incolores transparents, leur préparation, objets moulés à partir de ceux-ci ou de compositions les contenant

(30) Priorität: 01.02.1995 CH 271/95
(43) Veröffentlichungstag der Anmeldung: 07.08.1996
(73) Patentinhaber: EMS-INVENTA AG, 8001 Zürich (CH)
(72) Erfinder: Dalla Torre, Hans, Dr.Phil., CH-7013 Domat/Ems (CH)
(74) Vertreter: Hotz, Klaus, Dipl.-El.-Ing./ETH Patentanwalt

(56) Entgegenhaltungen:
- EP-A- 0 313 436
- EP-A- 0 550 308
- EP-A- 0 553 581
- DE-A- 2 642 244
- US-A- 4 898 896

## Beschreibung

Gegenstand der vorliegenden Erfindung sind farblose, transparente Copolyamide auf der Basis von cycloaliphatischen Diaminen und aromatischen Dicarbonsäuren, ihre Blends oder Legierungen mit Homopolyamiden und die daraus herstellbaren Formmassen.

In der ***DE 2'642'244*** werden Copolyamide aus substituierten cycloaliphatischen Diaminen, Isophthalsäure, welche noch 50 % Terephthalsäure enthalten kann, und aus 30 - 40 Gew% Lactamen, Omega-Aminocarbonsäuren oder Kombinationen von langkettigen Dicarbonsäuren und Diaminen mit 5 bis 12 C-Atomen beschrieben. Mit einem so hohen Anteil an zusätzlichen Monomeren, nämlich 30 - 40 %, werden bestenfalls Glasumwandlungspunkte um 170°C erreicht, die dementsprechend keine sehr hohen Wärmeformbeständigkeitswerte ergeben, wie sie für ausgewählte Anwendungen im Apparatebau, in sterilisierbaren Formkörpern für den medizinischen oder Lebensmittel-Gebrauch erforderlich sind.

Die ***EP 313'436*** beschreibt ähnliche Monomerkombinationen für transparente Polyamide, bei denen der Anteil an Terephthalsäure den von Isophthalsäure um 100 % und mehr übersteigen kann. Der Anteil an Lactam oder Omega-Aminocarbonsäure oder an Kombinationen von aliphatischen Diaminen und aliphatischen Dicarbonsäuren in Polyamid liegt somit höher als 20 %, bevorzugt höher als 30 %. Auch diese Polyamide besitzen einen TG nicht höher als 160°C, wodurch Anwendungen im höheren Temperaturbereich ausgeschlossen sind.

Die ***US 4 898 896, EP 0 553 581*** und ***EP 0 550 308*** beschreiben Copolyamide aus alkylsubstituierten Bis-(4-aminocyclohexyl)-alkanen mit Iso- und Terephthalsäure und grossen Lactamanteilen als Monomere, die ebenfalls aufgrund der zu zahlreichen C6-Bausteine ungenügend tiefe TG-Werte aufweisen.

Die Aufgabe dieser Erfindung liegt also im Mangel an Copolyamiden für Formkörper auf der Basis von cycloaliphatischen Diaminen und aromatischen Dicarbonsäuren, die nicht nur transparent, sondern auch farblos sind, Glasumwandlungstemperaturen (T_{G}) von über 175°C, bevorzugt über 195°C und hohe Wärmeformbeständigkeiten aufweisen, ohne dabei Steifheit, Festigkeit, höhere Zähigkeit und gute chemische Beständigkeit zu verlieren.

Diese Aufgabe wird gelöst durch die farblosen, transparenten Copolyamide auf der Basis cycloaliphatischer Diamine und aromatischer Dicarbonsäuren gemäss Anspruch 1, dadurch gekennzeichnet, dass sie aufgebaut sind aus
a) mindestens einem cycloaliphatischen Diamin mit 6 bis 24 C-Atomen in nahezu äquimolarem Verhältnis mit
b) Isophthalsäure, die durch 0 bis 50 Mol% Terephthalsäure und/oder Naphthalindicarbonsäure und/oder 0 bis 20 Mol% einer aliphatischen Dicarbonsäure ersetzt ist, und
c) bis zu 20 Mol% weiterer polyamidbildender Monomere, insbesondere 1 bis 19 Mol% mindestens eines Lactams oder einer Omega-Aminocarbonsäure oder der nahezu äquimolaren Mischung mindestens eines aliphatischen Diamins und mindestens einer aliphatischen Dicarbonsäure, welche 6 bis 12 C-Atome aufweisen,
wobei die Copolyamide eine Glasumwandlungstemperatur von mehr als 175°C aufweisen sowie durch Blends oder Legierungen der Copolyamide mit mindestens einem Homopolyamid, wobei die Copolyamide, ihre Blends oder Legierungen gegebenenfalls verarbeitungs-und/oder verwendungsbedingte Zusatzstoffe enthalten.

Die Aufgabe wurde insbesondere gelöst durch Copolyamide, deren cycloaliphatisches Diamin 15 bis 21 C-Atome und mindestens einen Cyclohexanring aufweist und insbesondere an dem mindestens einen Ring und/oder an einer zwischen zwei Ringen mittelständigen Methylengruppe ein- oder mehrfach durch Methyl-, Ethyl- oder Propylgruppen substituiert ist. Die Aufgabe wird ausserdem gelöst durch die aus den Copolyamiden, ihren Blends oder Legierungen mit Homopolyamiden herstellbaren Formkörpern sowie durch ein Verfahren zur Herstellung der Copolyamide.

Es wurde gefunden, dass insbesondere farblose, transparente, amorphe Copolyamide mit Glasumwandlungstemperaturen über 175°C aus cycloaliphatischen Diaminen a) wie Bis-(3-methyl-4-aminocyclohexyl)-methan (z.B. Laromin C 260 ®, BASF) oder Bis-(4-aminocyclohexyl)-methan oder Bis-(4-aminocyclohexyl)-2,2'-dimethylpropan, kombiniert mit aromatischen Dicarbonsäuren b) mit 8 bis 16 C-Atomen sowie wahlweise weiteren polyamidbildenden Monomeren c) hergestellt werden können. Die mindestens eine aromatische Dicarbonsäure ist Isophthalsäure, welche durch Terephthalsäure oder andere aromatische Dicarbonsäuren, wie Naphthalindicarbonsäure oder Gemischen davon, zu maximal 50 Mol% und/oder durch aliphatische Dicarbonsäuren zu maximal 20 Mol% ersetzt sein kann. Die weiteren polyamidbildenden Monomere c) sind bevorzugt Lactame oder Omega-Aminocarbonsäuren oder Kombinationen von aliphatischen Diaminen mit aliphatischen Dicarbonsäuren, welche jeweils 6 bis 12 C-Atome aufweisen, wobei der Anteil der Monomeren maximal 20 Mol% beträgt.

Mit einer Glasumwandlungstemperatur von über 175°C, insbesondere von über 185°C und ganz besonders zwischen 195 und 230°C, können die erfindungsgemässen Copolyamide in Hochtemperaturanwendungen bzw. für sterilisiebare Formteile eingesetzt werden. Besonders bewährt haben sich Copolyamide mit Glasumwandlungstemperaturen über 197°C.

In besonderen Ausführungsformen der erfindungsgemässsen Copolyamide ist das Lactam Decanolactam und/oder Dodecanolactam, wobei dessen Anteil maximal 20 Mol% beträgt und insbesondere zwischen 1 und 19 Mol% liegt.

Die Erfindung bilden weiterhin auch Blends oder Legierungen aus den erfindungsgemässen Copolyamiden mit weiteren Homopolyamiden aus der Gruppe PA12, PA11, PA6, PA612, PA610, PA69 und PA66, bevorzugt in Mengen bis zu 30 Gew%.
Die Copolyamide oder deren Mischungen oder deren Blends enthalten in vorteilhafter Weise Zusatzstoffe aus der Gruppe Kettenregler, Gleitmittel, Hitze- und UV-Stabilisatoren, Farben, Pigmente, Verstärkungsmittel aus der Gruppe Glas, Mineralien und organischen Fasern.
Die Erfindung betrifft auch die Formkörper, die aus den farblosen, transparenten Copolyamiden oder deren Blends oder Legierungen mit Homopolyamiden, bevorzugt aus der Gruppe PA12, PA11, PA6, PA612, PA610, PA69 und PA66 herstellbar sind und wahlweise verarbeitungs-und/oder verwendungsbedingte Zusatzstoffe, insbesondere Kettenregler, Gleitmittel, Hitze-und UV-Stabilisatoren, Farben, Pigmente und Verstärkungsmittel enthalten.

Die Erfindung betrifft ausserdem ein Verfahren zur Herstellung der farblosen, transparenten Copolyamide.
Das Polykondensationsverfahren dieser Rohstoffe kann in einem oder mehreren Teilschritten erfolgen, wobei vorerst das cycloaliphatische Diamin mit der aromatischen Säure als Salz zur Reaktion gebracht werden kann und das Lactam in einem zweiten Schritt mitkondensiert wird oder dass in einem Autoklaven alle 3 Typen von Monomeren polykondensiert und nachfolgend in einem Entgasungsextruder zu höheren Viskositäten nachkondensiert werden oder dass alle 3 Typen von Monomeren in einem Schritt in einem Hochdruckautoklaven zu höherer Viskosität polykondensiert werden oder mit Hilfe von mindestens zwei Reaktionsextrudern hergestellt werden, wobei der Polymeraustrag mittels Förderschnecke erfolgt. Die angewandten Reaktionstemperaturen betragen 280 - 320°C. Die Monomeren werden üblicherweise in einem Vorlagebehälter homogen gemischt, dabei werden häufig Kettenregler wie Benzoesäure, Ethylhexansäure, Stearinsäure sowie auch P-haltige Katalysatoren wie H₃PO₃, H₃PO₂, Phosphate oder organische P-Verbindungen und Salze wie Acetate oder Chloride zugegeben.

Diamine und Dicarbonsäuren werden oft nur in nahezu äquimolarem Verhältnis eingesetzt, um Verluste auszugleichen oder bestimmte Endgruppenkonzentrationen zu erreichen.

Die Formkörper aus den beschriebenen Copolyamiden zeichnen sich dadurch aus, dass sie eine hohe Zähigkeit, hohe Festigkeit und Steifheit, gute Spannungsrissbeständigkeit in Heisswasser und organischen Lösungsmitteln, gute Wechselbiegefestigkeit und Schmelzefestigkeiten besitzen. Die ohne weiteres erreichbaren höheren Viskositäten sind für moderne Verarbeitungsmaschinen wie Spritzgussmaschinen oder Blasformextruder kein Problem und in der Praxis erwünscht.

Die erfindungsgemässen Polyamide werden in den nachfolgenden Beispielen näher beschrieben:

### Beispiel 1

Über ein Lösegefäss von 200 l wurden in einen 130 l Autoklaven 7.0 kg Laurinlactam, 11.6 kg Isophthalsäure, 17.0 kg Bis-(3-methyl-4-aminocyclohexyl)-methan in Form von Laromin C260 ®, 120 g Benzoesäure, 10 g H₃PO₃, 250 g Irganox 245 Emulsion und 10 l Wasser nach intensiver Mischung bei 80°C eingefüllt. Nach einer Aufheizphase bis 160°C, einer Druckphase von 3 h bei 285°C und 18 bar und einer Entspannungs- bzw. Entgasungsphase bei 280°C von ca. 2 - 3 h konnte mittels einer beheizten Pumpe als Austragsvorrichtung ein transparenter Polyamidstrang abgezogen werden, welcher nach Abkühlung durch ein bis 40°C warmes Wasserbad granuliert wurde. Das getrocknete Granulat von ca. 32 kg besass folgende physikalischen Eigenschaften:

| | | |
|---|---|---|
| eta rel,(0,5 %ig, m-Kresol) | | 1,45 |
| Endgruppen NH₂/COOH | (µaeq/g) | 115 / 115 |
| TG (DSC) | (°C) | 192 |
| Schmelzeviskosität bei 270°C/12,6 N | (Pa·s) | 6'680 |
| Wassergehalt | (%) | < 0.005 |

Die aus dem Granulat durch Spritzguss hergestellten DIN-Prüfkörper besassen folgende mechanische Eigenschaften:

| | | |
|---|---|---|
| Schlagzähigkeit 23°C,trocken, nach DIN 53453 | (kJ/m²⁾ | 100 |
| Kerbschlagzähigkeit 23°C,tro., nach DIN 53453 | (kJ/m²) | 2.5 |
| Streckspannung 23°C,tro./konditioniert, DIN 53455 | (N/mm²) | 94 / 83 |
| Streckdehnung 23°C,tro./kond.,DIN 53455 | (%) | 8 / 6 |
| Reissfestigkeit 23°C,tro./kond, DIN 53455 | (N/mm²) | 81 / 73 |
| Reissdehnung 23°C,tro./kond | (%) | 5 / 11 |
| Zug-E-Modul 23°C,tro./kond., DIN 53457 | (N/mm²) | 2'420 / 2'570 |
| HDT A/B trocken, DIN 53461 / ISO 75 | (°C) | 130 / 143 |
| HDT A/B kond DIN 53461 / ISO 75 | (°C) | 124 / 149 |

### Beispiel 2

Ähnlich wie in Beispiel 1 wurden nach Homogenisierung bei 80°C in einem Lösegefäss in einen 130 l Autoklaven folgende Rohstoffe eingebracht:
- 6.0 kg: Laurinlactam
- 20.45 kg: Bis-(3-methyl-4-aminocyclohexyl)-methan
- 13.95 kg: Isophthalsäure
- 160 g: Benzoesäure
- 50 g: Mg-Stearat
- 5 kg: Wasser
- 12 g: H₃PO₂ (50 %ig)

Nach einer Druckphase, Entspannungs- und Entgasungsphase wurde mittels Strangabzug eine Polyamidmasse von ca. 35 kg abgezogen und granuliert, welche die folgenden Eigenschaften aufwies:

| | | |
|---|---|---|
| eta rel (0.5 %ig, m-Kresol) | | 1.433 |
| Endgruppen NH₂/COOH | (µaeq/g) | 79 / 35 |
| TG (DSC) | (°C) | 203 |
| Schmelzviskosität bei 270°C/12,6N, | (Pa·s | 16'107 |
| Wassergehalt | (Gew-%) | < 0.005 |

Das zu Prüfkörpern verspritzte Produkt ergab folgende mechanische Werte:

| | | |
|---|---|---|
| Schlagzähigkeit 23°C,tro., DIN 53453 | (kJ/m²) | oB |
| Kerbschlagzähigkeit 23°C,tro., DIN 53453 | (kJ/m²) | 3.1 |
| Biege-E-Modul 23°C,tro., DIN 53452 | (N/mm²) | 2'420 |
| Grenzbiegespannung 23°C,tro., DIN 53452 | (N/mm²) | 143 |
| Bruchfestigkeit 23°C,tro., DIN 53455 | (N/mm²) | 70 |
| Bruchdehnung 23°C,tro. | (%) | 23 |

### Beispiel 3

Eine vergleichbare Charge wie in Beispiel 1 wurde im 130 l Autoklaven polykondensiert, dafür wurden folgende Rohstoffe eingewogen:
- 6.5 kg: Laurinlactam
- 17 kg: Bis-(3-methyl-4-aminocyclohexyl-)methan
- 11.6 kg: Isophthalsäure
- 175g: Benzoesäure
- 0.05%: H₃PO₃
- 10 l: Wasser

Das daraus hergestellte Granulat besass eine Lösungsviskosität eta rel (0.5%ig m-Kr) von 1.422 und eine Schmelzviskosität von 1'414 Pa·s bei 270°C/122.6 N.
Der TG betrug 201°C. Klein-DIN-Balken davon zeigten eine Schlagzähigkeit "oB" (= ohne Bruch) und eine Kerbschlagzähigkeit von 1,0 kJ/m²; der Zug-E-Modul betrug tro 2'860 N/mm². Es wurden Wechselbiegefestigkeiten von 40'000 Zyklen auf einer C. Schenk Wechselbiegeapparatur (Dauerschwingversuch nach DIN 53442) gemessen.

Die Charge wurde in einem Reaktionsextruder ZSK 30 mit 2 Vakuumzonen bei ca. 290°C nachkondensiert. Das nachkondensierte Polyamid erfuhr eine starke Viskositäts-und Zähigkeitserhöhung auf eta rel 1.522 (0,5 %ig, m-Kr) bei einer Schmelzviskosität (270°C/122.6 N) von 3'316 Pa·s

Aus daraus hergestellten Prüfkörpern wurden folgende mechanische Eigenschaften gemessen:

| | | |
|---|---|---|
| Schlagzähigkeit 23°C, trocken | (kJ/m²) | oB |
| Kerbschlagzähigkeit 23°C, tro. | (kJ/m²) | 4.6 |
| Streckspannung 23°C, tro./kond. | (N/mm²) | 92 / 81 |
| Streckdehnung 23°C, tro./kond. | (%) | 8 / 7 |
| Reissfestigkeit 23°C, tro./kond. | (N/mm²) | 98 / 60 |
| Reissdehnung 23°C, tro./kond. | (%) | 18 / 20 |
| Zug-E-Modul 23°C, tro./kond. | (N/mm²) | 2'620/2'830 |
| Wechselbiegefestigkeit, trocken | (Zyklen) | 116'000 |

### Beispiel 4

In einem 2 t Autoklaven wurden 198 kg Laurinlactam, 510.2 kg Bis-(3-methyl-4-aminocyclohexyl)-methan, 282 kg Isophthalsäure, 4.8 kg Benzoesäure, 0.26 kg H₃PO₂, in 350 kg Weichwasser polykondensiert. Das gewonnene und getrocknete Granulat in der Menge von ca. 880 kg besass eine Lösungsviskosität eta rel von 1.46 (0.5 %ig, in m-Kr), eine Schmelzviskosität (270°C/122,6 N) von 1'528 Pa·s, Endgruppen NH₂/COOH (µaeq/g) 61 / 66, und einen Tg von 197.4°C.
Daraus hergestellte Klein-DIN-Balken besassen eine Kerbschlagzähigkeit bei 23°C von 3.8 kJ/m². Durch Nachkondensation in einem WPF-Entgasungsextruder ZSK 58 wurden eta rel-Werte von 1.66 erreicht und vom Granulat hergestellte Klein-DIN-Balken besassen eine Kerbschlagzähigkeit von 5.2 kJ/m².

## Patentansprüche

1. Farblose, transparente Copolyamide oder deren Blends oder Legierungen mit mindestens einem Homopolyamid, *dadurch gekennzeichnet*, dass die Copolyamide aufgebaut sind aus
a) mindestens einem cycloaliphatischen Diamin mit 6 bis 24 C-Atomen in nahezu äquimolarem Verhältnis mit
b) Isophthalsäure, die durch 0 bis 50 Mol% Terephthalsäure und/oder Naphthalindicarbonsäure und/oder 0 bis 20 Mol% einer aliphatischen Dicarbonsäure ersetzt ist,
und
c) bis zu 20 Mol% weiterer polyamidbildender Monomere,
wobei die Copolyamide eine Glasumwandlungstemperatur von mehr als 175°C aufweisen und die Copolyamide oder deren Blends oder Legierungen wahlweise verarbeitungs- oder verwendungsbedingte Zusatzstoffe enthalten.

2. Copolyamide gemäss Anspruch 1, *dadurch gekennzeichnet*, dass die polyamidbildenden Monomeren c) 1 bis 19 Mol% mindestens eines Lactams oder einer Omega-Aminocarbonsäure oder der nahezu äquimolaren Mischung mindestens eines aliphatischen Diamins und mindestens einer aliphatischen Dicarbonsäure, welche 6 bis 12 C-Atome aufweisen, sind.

3. Copolyamide gemäss Anspruch 1 oder 2, dadurch gekennzeichnet, dass die Glasumwandlungstemperatur über 185°C liegt.

4. Copolyamide gemäss einem der voranstehenden Ansprüche, dadurch gekennzeichnet, dass die Glasumwandlungstemperatur zwischen 195 und 230°C liegt.

5. Copolyamide gemäss einem der voranstehenden Ansprüche, dadurch gekennzeichnet, dass das Diamin 15 bis 21 C-Atome und mindestens einen Cyclohexanring aufweist.

6. Copolyamide gemäss einem der voranstehenden Ansprüche, dadurch gekennzeichnet, dass das Diamin an dem mindestens einen Ring und/oder an der mittelständigen Methylengruppe zwischen zwei Ringen ein- oder mehrfach durch Methyl-, Ethyl- oder Propylgruppen substituiert ist.

7. Copolyamide gemäss Anspruch 5, dadurch gekennzeichnet, dass
das substituierte cycloaliphatische Diamin ein Bis-(3-methyl-4-aminocyclohexyl)-methan ist.

8. Copolyamide gemäss einem der voranstehenden Ansprüche, dadurch gekennzeichnet, dass
das Lactam Decanolactam oder Dodecanolactam ist.

9. Copolyamide gemäss einem der voranstehenden Ansprüche in einem Blend oder einer Legierung mit mindestens einem Homopolyamid, ausgewählt aus der Gruppe PA12, PA11, PA6, PA612, PA610, PA69 und PA66, welches in Anteilen bis zu 30 Gew% enthalten ist.

10. Copolyamide gemäss einem der voranstehenden Ansprüche dadurch gekennzeichnet, dass
die Zusatzstoffe aus der Gruppe Kettenregler, Gleitmittel, Hitze- und UV-Stabilisatoren, Farben, Pigmente und Verstärkungsmittel aus der Gruppe Glas, Mineralien und organischen Fasern ausgewählt sind.

11. Formkörper, herstellbar aus farblosen, transparenten Copolyamiden oder deren Blends oder Legierungen gemäss einem der Ansprüche 1 bis 10.

12. Verfahren zur Herstellung von farblosen, transparenten Copolyamiden gemäss einem der Ansprüche Anspruch 1 bis 10, dadurch gekennzeichnet, dass
man die Monomeren polykondensiert und nachfolgend in einem Entgasungsextruder auf höhere Viskositäten nachkondensiert.

## Claims

1. Colourless, transparent polyamides or blends of alloys thereof with at least one homopolyamide, characterised in that
the copolyamides are synthesised from
a) at least one cycloaliphatic diamine containing 6 to 24 C atoms in an approximately equimolar ratio with
b) isophthalic acid which is substituted by 0 to 50 mole % of terephthalic acid and/or naphthalene dicarboxylic acid and/or 0 to 20 mole % of an aliphatic dicarboxylic acid,
and
c) up to 20 mole % of further polyamide-forming monomers,
wherein the copolyamides have a glass transition temperature of more than 175 °C and the copolyamides or the blends or alloys thereof optionally contain additive substances determined by their processing or use.

2. Copolyamides according to claim 1, characterised in that
the polyamide-forming monomers c) are 1 to 19 mole % of at least one lactam or of an omega-aminocarboxylic acid, or of the approximately equimolar mixture of at least one aliphatic diamine and at least one aliphatic dicarboxylic acid which contain 6 to 12 C atoms.

3. Copolyamides according to claim 1 or 2, characterised in that
their glass transition temperature is above 185°C.

4. Copolyamides according to any one of the preceding claims, characterised in that
their glass transition temperature is between 195 and 230°C.

5. Copolyamides according to any one of the preceding claims, characterised in that
the diamine contains 15 to 21 C atoms and at least one cyclohexane ring.

6. Copolyamides according to any one of the preceding claims, characterised in that
the diamine on the at least one ring and/or on the central methylene group between two rings is singly- or multiply substituted by methyl, ethyl or propyl groups.

7. Copolyamides according to claim 5, characterised in that
the substituted cycloaliphatic diamine is a bis-(3-methyl-4-aminocyclohexyl)-methane.

8. Copolyamides according to any one of the preceding claims, characterised in that
the lactam is decanolactam or dodecanolactam.

9. Copolyamides according to any one of the preceding claims in a blend or an alloy with at least one homopolyamide selected from the group comprising PA12, PA11, PA6, PA612, PA610, PA69 and PA66, which is contained in proportions up to 30 % by weight.

10. Copolyamides according to any one of the preceding claims, characterised in that
the additive substances are selected from the group comprising chain regulators, parting agents, heat and UV stabilisers, dyes, pigments, and reinforcing agents selected from the group comprising glass, minerals and organic fibres.

11. Mouldings which can be produced from colourless, transparent copolyamides or blends or alloys thereof according to any one of claims 1 to 10.

12. A process for producing colourless, transparent copolyamides according to any one of claims 1 to 10, characterised in that
the monomers are subjected to condensation polymerisation and are subsequently post-condensed to higher viscosities in a degassing extruder.

## Revendications

1. Copolyamides transparents incolores ou leurs mélanges ou alliages avec au moins un homopolyamide, caractérisés en ce que les copolyamides sont préparés à partir de
a) au moins une diamine cycloaliphatique présentant de 6 à 24 atomes de carbone
dans un rapport à peu près équimolaire avec
b) de l'acide isophtalique qui est remplacé par 0 à 50 % en mole d'acide téraphtalique et/ou d'acide naphtalènedicarboxylique et/ou 0 à 20 % en mole d'un acide dicarboxylique aliphatique, et
c) jusqu'à 20% en mole d'un autre monomère formant polyamide,
les copolyamides présentant une température de transition vitreuse supérieure à 175° C et les copolyamides ou leurs mélanges ou alliages contenant éventuellement des additifs pour le traitement ultérieur ou l'utilisation ultérieure.

2. Copolyamides selon la revendication 1, caractérisés en ce que les monomères c) formant polyamide sont de 1 à 19 % en mole d'au moins un lactame ou d'un acide omega-aminocarboxylique ou d'un mélange environ équimolaire d'au moins une diamine aliphatique et d'au moins un acide dicarboxylique aliphatique, qui présentent 6 à 12 atomes de carbone.

3. Copolyamides selon la revendication 1 ou 2, caractérisés en ce que la température de transition vitreuse est au-dessus de 185° C.

4. Copolyamides selon l'une quelconque des revendications précédentes, caractérisés en ce que la température de transition vitreuse est comprise entre 195 et 230° C.

5. Copolyamides selon l'Une quelconque des revendications précédentes, caractérisés en ce que la diamine présente de 15 à 21 atomes de carbone et au moins un noyau cyclohexane.

6. Copolyamides selon l'une quelconque des revendications précédentes, caractérisés en ce que la diamine est substituée une ou plusieurs fois par des groupes méthyle, éthyle ou propyle au niveau d'au moins un noyau et/ou au niveau du groupe méthylène coincé entre deux noyaux.

7. Copolyamides selon la revendication 5, caractérisés en ce que la diamine cycloaliphatique substituée est le bis-(3-méthyl-4-aminocyclohexyl)-méthane.

8. Copolyamides selon l'une quelconque des revendications précédentes, caractérisés en ce que le lactame est le décanolactame ou le dodécanolactame.

9. Copolyamides selon l'une quelconque des revendications précédentes, sous la forme d'un mélange ou d'un alliage avec au moins un homopolyamide choisi dans le groupe constitué de PA12, PA11, PA6, PA612, PA610, PA69 et PA66, lequel est présent à raison de jusqu'à 30 % en poids.

10. Copolyamides selon l'une quelconque des revendications précédentes, caractérisés en ce que l'additif est choisi dans le groupe constitué des régulateurs de chaîne, des lubrifiants, des stabilisants à la chaleur et aux UV, des colorants, des pigments et des agents de renforcement choisis parmi le verre, les fibres minérales ou organiques.

11. Article moulé préparé à partir de copolyamides transparents, incolores ou de leurs mélanges ou alliages selon l'une quelconque des revendications 1 à 10.

12. Procédé pour la préparation de copolyamides transparents, incolores, selon l'une quelconque des revendications 1 à 10, caractérisé en ce que l'on soumet les monomères à une polycondensation et on soumet ensuite l'ensemble à une post-condensation dans une extrudeuse de type à élimination des gaz jusqu'à une viscosité supérieure.
